# EUROPÄISCHE PATENTANMELDUNG

(11) **EP 3 518 395 A1**
(43) Veröffentlichungstag der Anmeldung: **31.07.2019**
(21) Anmeldenummer: 19150358.0
(22) Anmeldetag: 04.01.2019
(51) Int. Cl.: H02K 5/04, H02K 5/15, H02K 5/173, H02K 7/14, H02K 5/10, H02K 5/22

(54) **MOTORGEHÄUSE**

(30) Priorität: 18.01.2018 DE 102018200766
(71) Anmelder: Bühler Motor GmbH, 90459 Nürnberg (DE)
(72) Erfinder: Reinecker, Bernd, 90491 Nürnberg (DE)

(57) **Zusammenfassung**

Die Erfindung betrifft ein tiefgezogenes Motorgehäuse (1) eines elektronisch kommutierten Gleichstrommotors (10), mit einem geringfügig von einer hohlzylindrischen Form abweichenden Statoraufnahmebereich (2), einem Verbindungsbereich (3) zur Verbindung mit einer Zwischenwand (4), einem sich radial nach innen erstreckenden Lagerschildbereich (5) und einem Lagerbereich (6). Aufgabe der Erfindung ist es ein Motorgehäuse bereitzustellen, das einfach aufgebaut und einfach herstellbar ist und das axial sehr kompakt baut. Diese Aufgabe wird erfindungsgemäß durch die Merkmale des Anspruchs 1 gelöst.

## Beschreibung

Die Erfindung betrifft ein tiefgezogenes Motorgehäuse (1) eines elektronisch kommutierten Gleichstrommotors (10), mit einem geringfügig von einer hohlzylindrischen Form abweichenden Statoraufnahmebereich (2), einem Verbindungsbereich (3) zur Verbindung mit einer Zwischenwand (4), einem sich radial nach innen erstreckenden Lagerschildbereich (5) und einem Lagerbereich (6).

Tiefgezogene Gehäuse werden regelmäßig bei einer Vielzahl von Elektromotoren eingesetzt. Sie können als geschlossener Gehäusetopf oder mit einer Wellendurchführung ausgeführt sein. Sie zeichnen sich durch eine einfache Herstellbarkeit und eine dünne Wandung und damit durch einen geringen Materialverbrauch aus. Tiefgezogene Gehäuse werden bevorzugt, wenn an die äußere Gestalt des Gehäuses nur geringe Anforderungen gestellt werden. Häufig werden diese Gehäuse mit Lagerschilden kombiniert, die durch einen Urformprozess hergestellt sind. Auf diese Weise können die genannten Einschränkungen teilweise kompensiert werden. Der besondere Vorteil der tiefgezogenen Gehäuse liegt auch darin, dass Motorgehäuse hierdurch auf einfache Weise zweiteilig ausgebildet werden können, wobei ein Lagerschild durch einen Topfboden gebildet wird. Der Lagerbereich kann sowohl axial vorspringend als auch rückspringend ausgeführt werden. Letzteres erfordert zusätzliche Prozessschritte, erlaubt aber eine axial kompaktere Bauweise. Insbesondere elektronisch kommutierte Gleichstrommotoren mit Statorwicklungen eignen sich hierfür, weil innerhalb eines Wicklungskopfes in der Regel ausreichend Bauraum für die Lagerung vorhanden ist.

Aufgabe der Erfindung ist es ein Motorgehäuse bereitzustellen, das einfach aufgebaut und einfach herstellbar ist und das axial sehr kompakt baut.

Diese Aufgabe wird durch die Merkmale des Anspruchs 1 gelöst. Durch die Ausbildung als tiefgezogenes Gehäuse wird ein zusätzlicher Lagerschild mit Lageraufnahmekontur eingespart. Hierdurch wird auch Bauraum durch die geringere Materialstärke des tiefgezogenen Gehäuses eingespart. Eine besonders kompakte Bauweise wird durch die Anordnung eines Lagerbereichs in Richtung eines Gehäuseinnenraums erreicht. Ein Aufnahmebereich für ein Anbauteil ist zwischen dem Lagerbereich und einem Lagerschildbereich angeordnet. Der Aufnahmebereich nimmt einen Axialabschnitt eines durch den Gleichstrommotor angetriebenen Getriebes oder einer Pumpe auf.

Weiterbildungen der Erfindung werden in den Unteransprüchen näher ausgeführt. Es ist vorgesehen den Aufnahmebereich (8) für das Anbauteil (12) und den Lagerbereich (6) im Querschnitt stufenförmig auszubilden. Hierdurch lässt sich ein zylindrischer Körper, wie ein Axialabschnitt eines Anbauteils, einfach aufnehmen und einpressen. Randbereiche zwischen einem zylindrischen und einem scheibenförmigen Abschnitt des Aufnahmebereichs sind dabei vorzugsweise durch eine Hohlkehle freigespart, so dass das Anbauteil satt aufliegen kann.

Das Anbauteil (12) ist nicht Bestandteil des Gleichstrommotors (10) und dient nicht der Funktion des Gleichstrommotors.

Der Aufnahmebereich (8) dient vorzugsweise zur Aufnahme eines Getriebes, insbesondere Planetengetriebe oder einer Pumpe, insbesondere Außenzahnradpumpe, einer Gerotorpumpe, einer Flügelzellenpumpe oder einer ähnlich aufgebauten Verdrängerpumpe.

Die Erfindung kann bei Ölpumpenanwendungen eingesetzt werden, insbesondere für Getriebeölpumpen. Im Übrigen sind auch Antriebe von SCR-Pumpen zur NOx-Reduktion ein mögliches Einsatzfeld.

In einer Weiterbildung der Erfindung ist vorgesehen, dass der Lagerschildbereich (5) über den Umfang verteilt mehrere Lochungen (11) aufweist und das Anbauteil mit dem Lagerschildbereich (5) verschraubt ist. Hierdurch ist eine sehr sichere mechanische Verbindung zwischen dem Anbauteil und dem Motorgehäuse (1) gegeben.

Dabei werden die Schrauben nicht als selbstfurchende Schrauben ausgeführt und direkt in das Motorgehäuse geschraubt, sondern in Schraubenmuttern (9), die im Lagerschildbereich (5) im Gehäuseinnenraum befestigt sind. Dabei fluchten die Innengewinde der Schraubenmuttern mit den Lochungen (11) des Lagerschildbereichs 5.

Zur Befestigung der Schraubenmuttern am Motorgehäuse eignen sich Schweißverfahren. Beispielhaft können die Schraubenmuttern durch Induktivschweißen befestigt werden.

Besonders bevorzugt werden Hutmuttern verwendet, da diese auf einer Seite geschlossen sind. Daher eignen sie sich insbesondere um die Dichteigenschaften des Motorgehäuses zu verbessern. Im vorliegenden Einsatzfall ist keine hermetische Dichtheit erforderlich. Es ist aber wichtig, dass keine Staub oder Schmutzpartikel in das Motorgehäuse eindringen können.

Um eine ausreichende Festigkeit zu erreichen genügen drei oder vier Schraubenmuttern, die möglichst gleichmäßig über den Umfang des Lagerschildbereichs verteilt sind.

Ein hohlzylindrischer Bereich des Aufnahmebereichs (8) eignet sich zur Zentrierung des Anbauteils. Da der Aufnahmebereich (8) für das Anbauteil und der Lageraufnahmebereich im selben Werkzeug hergestellt werden, lassen sich hohe Genauigkeiten hinsichtlich Koaxialität erreichen.

Weiter ist vorgesehen, dass die Lochungen (11) mit Ausnehmungen eines Anschraubflansches oder Befestigungsaugen fluchten, wobei sich der Anschraubflansch bzw. die Befestigungsaugen radial über den Aufnahmebereich (8) erstrecken. Hierdurch kann auf einfache Weise eine Trennung zwischen einer Gehäusefunktion des Anbauteils und einer Befestigungsfunktion erreicht werden. Dies ist vor allem bei Pumpenanwendungen wichtig, denn insbesondere bei Zahnrad- oder Flügelzellenpumpen werden sehr hohe Anforderungen an die Genauigkeit der Planflächen im Pumpenraum gestellt.

Bei vielen Anwendungen mit axial begrenztem Bauraum ist radial ein größeres Platzangebot verfügbar. In einer Weiterbildung der Erfindung erstreckt sich daher eine mit dem tiefgezogenen Motorgehäuse verbundene Zwischenwand (4) radial über einen Statoraufnahmebereich (2). Hierdurch lassen sich große elektrische Bauteile unterbringen, die ansonsten den axialen Bauraum vergrößern würden.

Im Übrigen ist vorgesehen, dass die Zwischenwand (4) zumindest zwei axial an unterschiedlichen Stellen angeordnete Wandungen (20, 21) aufweist, wobei die distale Wandung (21) als Anlagefläche für eine Leiterplatte (13) dient und die proximale Wandung (20) einen Kondensatoraufnahmebereich (33) für einen Kondensator (34) der Leiterplatte (13) bildet. Die proximale Wandung kann bei Bedarf auch über einen Verbindungsbereich (3) hinaus erweitert sein, um ausreichend Bauraum zur Aufnahme von Kondensatoren (34) bereitzustellen. Die Leiterplatte (13) liegt aus Platzgründen vorzugsweise an der distalen Wandung an, kann jedoch auch einen Abstand zu dieser aufweisen.

Die Zwischenwand (4) weist zweckmäßigerweise eine quadratische bis rechteckige Grundform auf und die Kondensatoren sind in den Ecken der Grundfläche angeordnet. Hierdurch wird eine besonders kompakte Bauweise, insbesondere in axialer Richtung erzielt. Die Kondensatoren sind elektrisch mit der Leiterplatte verbunden und ragen in die proximale Richtung.

Die Erfindung wird nachfolgend anhand von Ausführungsbeispielen näher erläutert. Es zeigen:
Fig. 1 eine Schnittdarstellung durch einen elektronisch kommutierten Gleichstrommotor,
Fig. 2 eine räumliche Darstellung eines tiefgezogenen Motorgehäuses und
Fig. 3 eine weitere Schnittdarstellung durch den elektronisch kommutierten Gleichstrommotor.

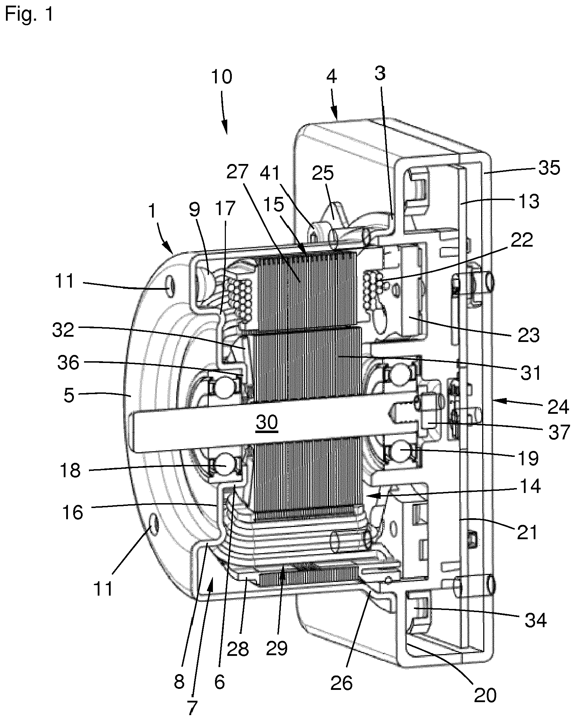

Fig. 1 zeigt eine Schnittdarstellung durch einen elektronisch kommutierten Gleichstrommotor 10, bestehend aus einem tiefgezogenen Motorgehäuse 1, einer Zwischenwand 4, die als Lagerschild ausgebildet ist und einen Gehäuseinnenraum 7 axial abschließt, einem Magnetrotor 14, einem bewickelten Stator 15. Der Magnetrotor 14 weist eine Welle 30 mit Sensormagnet 37 am Wellenende, ein Rotorblechpaket 31 und radial angeordnete Permanentmagnete 32 auf. Der Stator 15 besteht aus einem Statorblechpaket 27, einer Isolierung 28 und einer Wicklung 29. Das tiefgezogene Motorgehäuse 1 weist einen Verbindungsbereich 3 zur Verbindung mit der Zwischenwand 4, einen kegeligen Übergangsbereich 26 zwischen einem Statoraufnahmebereich 2 und einem Verbindungsbereich 3, radiale Anschraubaugen 25, einen Lagerbereich 6, einen Lagerschildbereich 5 und einen Aufnahmebereich 8 für ein Anbauteil auf. Der Lagerschildbereich 5 hat Lochungen 11, die mit Schraubenmuttern 9 fluchten, die auf der Gehäuseinnenseite am Lagerschildbereich befestigt sind. Hierbei handelt es sich um durch Induktivschweißen befestigte Hutmuttern, deren offene Seiten in die Lochungen 11 münden. Der Aufnahmebereich 8 ist hohlzylindrisch (herstellungsbedingt mit geringer Abweichung hiervon), welcher durch eine ringscheibenförmige Axialanlagefläche 16 begrenzt ist. Im Übergangsbereich zwischen dem Aufnahmebereich 8 und der Axialanlagefläche 16 ist eine Hohlkehle 17 vorgesehen, die dazu dient den unvermeidlichen Kantenradius axial zu verlagern und damit eine satte Aufnahme eines Anbauteils 12 zu ermöglichen. Im Lagerbereich 6 ist ein erstes Kugellager 18 eingepresst, welches sich axial an einem kragenförmigen Lageranschlag 36 abstützt. Ein zweites Kugellager 19 ist in der Zwischenwand 4 aufgenommen. Die Zwischenwand 4 weist eine proximale Wandung 20 und eine distale Wandung 21 auf. Die proximale Wandung 20 schließt in der vorliegenden Ausführung mit dem Verbindungsbereich 3 des tiefgezogenen Motorgehäuses 1 ab. Die distale Wandung springt axial vor, um einem Wicklungskopf 22 und einer Wicklungsverschaltungsplatte 23 ausreichend Bauraum zur Verfügung zu stellen. In der Zwischenwand 4 ist im Bereich der distalen Wandung 21 ein Kontakt eingegossen (nicht erkennbar), welcher eine Verbindung zwischen der Wicklungsverschaltungsplatte und einer Leiterplatte 13 herstellt. Die Zwischenwand 4 ist Teil eines Elektronikgehäuses 24 mit Leistungsbauteilen zur Schaltung der Wicklungsspulen. Um die Wärme von den Leistungsbauteilen abzuführen ist vorgesehen in der Zwischenwand 4 Kühlbleche einzubetten, welche einen Kühlpfad von den Leistungsbauelementen zu den Anschraubaugen 25 und zum Motorgehäuse 1 herstellen. Das Motorgehäuse 1 ist mittels Schrauben 42 über die Anschraubaugen 25 mit der Zwischenwand 4 und damit dem Elektronikgehäuse 24 verbunden.

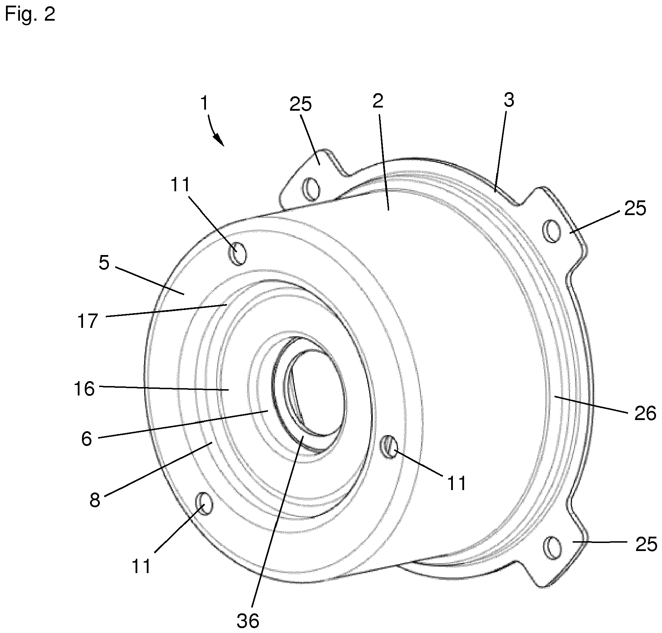

Fig. 2 zeigt eine räumliche Darstellung des tiefgezogenen Motorgehäuses 1, mit dem Verbindungsbereich 3, dem Statoraufnahmebereich 2, dem Übergangsbereich 26, dem Lagerschildbereich 5, dem Lagerbereich 6, dem Lageranschlag 36, dem Aufnahmebereich 8 für das Anbauteil, der Axialanlagefläche 16, der Hohlkehle 17, den Lochungen 11 und mehreren Anschraubaugen 25.

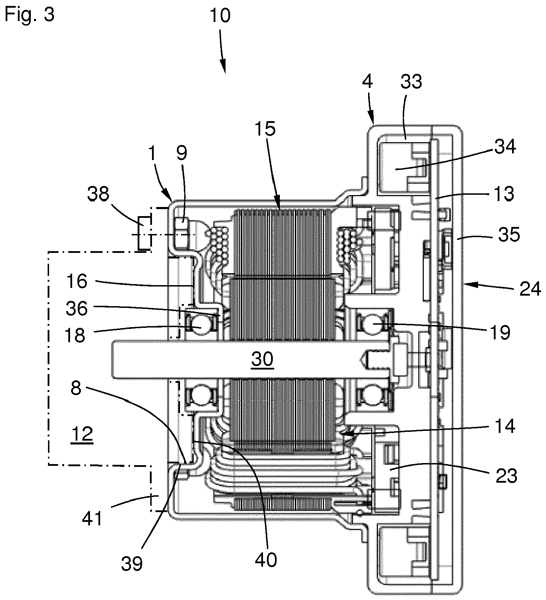

Fig. 3 zeigt eine weitere Schnittdarstellung durch den elektronisch kommutierten Gleichstrommotor 10, mit dem tiefgezogenen Motorgehäuse 1, der Zwischenwand 4, der Wicklungsverschaltungsplatte 23, dem Elektronikgehäuse 24 mit Gehäusedeckel 35, der Leiterplatte 13, dem Rotor 14 mit Welle 30, dem Stator 15, den Schraubenmuttern 9, den Kugellagern 18 und 19, einem Anbauteil 12, welches mit Befestigungsschrauben 38 am Motorgehäuse 1 befestigt ist, wobei die Befestigungsschrauben 38 mit den Schraubenmuttern 9 verschraubt sind (nur eine Schraube dargestellt). Das Anbauteil weist einen zylindrischen Bereich 39 auf, welcher in dem Aufnahmebereich 8 eingepresst ist. Je nach Anwendung kann auch auf eine Pressverbindung verzichtet werden. Eine Stirnfläche 40 des Anbauteils liegt an der Axialanlagefläche 16 des Motorgehäuses 1 an. Auf der Leiterplatte 13 sind auf der proximalen Seite Kondensatoren 35 angeordnet, die in Kondensatoraufnahmebereichen 33 der Zwischenwand 4 aufgenommen sind.

### Bezugszeichenliste

- 1: Motorgehäuse
- 2: Statoraufnahmebereich
- 3: Verbindungsbereich
- 4: Zwischenwand
- 5: Lagerschildbereich
- 6: Lagerbereich
- 7: Gehäuseinnenraum
- 8: Aufnahmebereich
- 9: Schraubenmutter
- 10: Gleichstrommotor
- 11: Lochung
- 12: Anbauteil
- 13: Leiterplatte
- 14: Magnetrotor
- 15: Stator
- 16: Axialanlagefläche
- 17: Hohlkehle
- 18: erstes Kugellager
- 19: zweites Kugellager
- 20: proximale Wandung
- 21: distale Wandung
- 22: Wicklungskopf
- 23: Wicklungsverschaltungsplatte
- 24: Elektronikgehäuse
- 25: Anschraubaugen
- 26: Übergangsbereich
- 27: Statorblechpaket
- 28: Isolierung
- 29: Wicklung
- 30: Welle
- 31: Rotorblechpaket
- 32: Permanentmagnet
- 33: Kondensatoraufnahmebereich
- 34: Kondensator
- 35: Gehäusedeckel
- 36: Lageranschlag
- 37: Sensormagnet
- 38: Befestigungsschraube
- 39: zylindrischer Bereich
- 40: Stirnfläche
- 41: Anschraubflansch
- 42: Schraube

## Patentansprüche

1. Tiefgezogenes Motorgehäuse (1) eines elektronisch kommutierten Gleichstrommotors (10), mit einem geringfügig von einer hohlzylindrischen Form abweichenden Statoraufnahmebereich (2), einem Verbindungsbereich (3) zur Verbindung mit einer Zwischenwand (4), einem sich radial nach innen erstreckenden Lagerschildbereich (5), einem Lagerbereich (6), welcher sich vom Lagerschildbereich (5) aus in Richtung eines Gehäuseinnenraums (7) erstreckt und einem axial zwischen dem Lagerschildbereich (5) und dem Lagerbereich (6) außerhalb des Gehäuseinnenraums (7) angeordneten Aufnahmebereich (8) für ein Anbauteil (12).

2. Motorgehäuse nach Anspruch 1, **dadurch gekennzeichnet, dass** der Aufnahmebereich (8) für das Anbauteil (12) und der Lagerbereich (6) im Querschnitt stufenförmig ausgebildet sind.

3. Motorgehäuse nach Anspruch 1 oder 2, **dadurch gekennzeichnet, dass** das Anbauteil (12) nicht Bestandteil des Gleichstrommotors (10) ist und nicht der Funktion des Gleichstrommotors (10) dient.

4. Motorgehäuse nach Anspruch 1, 2 oder 3, **dadurch gekennzeichnet, dass** das Anbauteil (12) ein Getriebe oder eine Pumpe ist.

5. Motorgehäuse nach zumindest einem der vorangehenden Ansprüche **dadurch gekennzeichnet, dass** der Lagerschildbereich (5) über den Umfang verteilt mehrere Lochungen (11) aufweist und das Anbauteil (12) mit dem Lagerschildbereich (5) verschraubt ist.

6. Motorgehäuse nach Anspruch 5, **dadurch gekennzeichnet, dass** im Gehäuseinnenraum im Lagerschildbereich (5) Schraubenmuttern (9) befestigt sind, wobei deren Innengewinde mit den Lochungen (11) fluchtet.

7. Motorgehäuse nach Anspruch 6, **dadurch gekennzeichnet, dass** die Schraubenmuttern (9) mit dem Lagerschildbereich (5) verschweißt sind.

8. Motorgehäuse nach Anspruch 6 oder 7, **dadurch gekennzeichnet, dass** die Schraubenmuttern (9) durch Induktivschweißen mit dem Lagerschildbereich (5) befestigt sind.

9. Motorgehäuse nach Anspruch 6, 7 oder 8, **dadurch gekennzeichnet, dass** die Schraubenmuttern (9) Hutmuttern sind und das Motorgehäuse (1) zur Umgebung abgedichtet ist.

10. Motorgehäuse nach Anspruch 5, 6, 7, 8 oder 9, **dadurch gekennzeichnet, dass** drei oder vier Schrauben zur Befestigung des Anbauteils (12) vorgesehen sind.

11. Motorgehäuse nach zumindest einem der vorangehenden Ansprüche, **dadurch gekennzeichnet, dass** ein hohlzylindrischer Bereich des Aufnahmebereichs (8) zur Zentrierung des Anbauteils (12) dient.

12. Motorgehäuse nach zumindest einem der Ansprüche 5 bis 11, **dadurch gekennzeichnet, dass** die Lochungen (11) mit Ausnehmungen eines Anschraubflansches (41) oder Befestigungsaugen fluchten, wobei sich der Anschraubflansch (41) bzw. die Befestigungsaugen radial über den Aufnahmebereich (8) erstrecken.

13. Motorgehäuse nach zumindest einem der vorangehenden Ansprüche, **dadurch gekennzeichnet, dass** sich die Zwischenwand (4) radial über den Statoraufnahmebereich (2) des Motorgehäuses (1) erstreckt.

14. Motorgehäuse nach Anspruch 13, **dadurch gekennzeichnet, dass** die Zwischenwand (4) zumindest zwei axial an unterschiedlichen Stellen angeordnete Wandungen aufweist, wobei die distale Wandung (21) als Anlagefläche für eine Leiterplatte (13) dient und die proximale Wandung (20) einen Kondensatoraufnahmebereich (33) der Leiterplatte (13) bildet.

15. Motorgehäuse nach Anspruch 14, **dadurch gekennzeichnet, dass** die Zwischenwand (4) eine quadratische bis rechteckige Grundform aufweist und die Kondensatoren (35) in den Ecken der Grundfläche angeordnet sind.
